# EUROPEAN PATENT SPECIFICATION

(11) **EP 3 157 211 B1**
(45) Date of publication and mention of the grant of the patent: **28.11.2018**
(21) Application number: 14881736.4
(22) Date of filing: 24.10.2014
(51) Int. Cl.: H04L 12/64, H04L 12/721, H04L 12/751, H04L 12/753

(54) **ISIS-BASED FLOODING METHOD AND DEVICE**
ÜBERFLUTUNGSVERFAHREN UND VORRICHTUNG AUF ISIS-BASIS
PROCÉDÉ ET DISPOSITIF D'INONDATION SUR LA BASE D'ISIS

(30) Priority: 18.07.2014 CN 201410345660
(43) Date of publication of application: 19.04.2017
(73) Proprietor: ZTE Corporation, Shenzhen, Guangdong 518057 (CN)
(72) Inventor: WU, Qiang, Shenzhen Guangdong 518057 (CN)
(74) Representative: HGF Limited
(86) International application number: PCT/CN2014/089495
(87) International publication number: WO 2015/117412

(56) References cited:
- EP-A2- 1 107 507
- CN-A- 102 882 784
- CN-A- 103 532 840
- CN-A- 103 546 381
- US-A1- 2014 043 956
- US-A1- 2014 112 188
- CALLON DIGITAL EQUIPMENT CORPORATION R: "Use of OSI IS-IS for Routing in TCP/IP and Dual Environments; rfc1195.txt", NETWORK WORKING GROUP RFC 1717, INTERNET SOCIETY (ISOC) 4, RUE DES FALAISES CH- 1205 GENEVA, SWITZERLAND, CH, 1 December 1990 (1990-12-01), XP015006139, ISSN: 0000-0003
- KORKMAZ T ET AL: "Hybrid flooding and tree-based broadcasting for reliable and efficient link-state dissemination", GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 3, 17 November 2002 (2002-11-17), pages 2400-2404, XP010636178, DOI: 10.1109/GLOCOM.2002.1189061 ISBN: 978-0-7803-7632-8
- FANGWEI HU QIANG WU ZTE CORPORATION ANDREW QU MEDIATEC: "ISIS LSP Flooding Optimization; draft-hu-isis-lsp-flooding-optimization-00 .txt", ISIS LSP FLOODING OPTIMIZATION; DRAFT-HU-ISIS-LSP-FLOODING-OPTIMIZATION-00 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 December 2014 (2014-12-19), pages 1-5, XP015103657, [retrieved on 2014-12-19]

## Description

### Technical Field

The present invention relates to the field of communication, in particular to a flooding method and device based on an Intermediate System to Intermediate System (ISIS) routing protocol.

### Background

The Intermediate System to Intermediate System (ISIS) routing protocol is a dynamic and link-state-based Interior Gateway Protocol (IGP). After ISIS protocol interactively negotiates to establish neighbors through a hello packet, each Intermediate System (IS)generates a Link State Protocol Data Unit (LSP) to describe link state information of the IS, sends the LSP to a network and further stores LSPs sent by all IS devices on topology of the network to form a Link State Data Base (LSDB). ISIS uses the LSDB to compute an optimal route to a destination address through a Shortest Path First (SPF) algorithm. On the network, any IS will send out the LSP generated by the IS from outgoing interfaces having neighbors; and after the LSP is received from one interface, the LSP is sent out from another interface, and this propagation process which enables the LSP saved by all ISs of the network to be finally consistent is called as LSP flooding.

In integrated ISIS, the LSP mainly contains a great amount of IP reachability information, i.e., IP prefix routing information. The information is generally saved in the LSP of which the number is non-zero and the information will not influence network topology computation.

Thus, in a large-scale network, the link state database which needs to be notified is relatively huge. Particularly, a great amount of IP reachability information generally needs to be notified in such network. The IP reachability information generated by an IS in the LSP possibly and frequently changes, and the periodic update of the LSP will cause that a great number of LSP packets need to be synchronized on the network. Finally, many network bandwidth resources are occupied by the LSP, simultaneously, when an IS sends the LSP on all other interfaces except a receiving interface, a CPU of the IS will be caused to be busy; and further, since the sending of a great number of LSPs is always processed, which causes that a Hello keep-alive packet cannot be sent in time from this interface to disconnect the neighbor link.

So far, an effective solution has not been put forward to solve the problem that excessive resources are occupied by the LSPs in the existing technology.

The document CALLON DIGITAL EQUIPMENT CORPORATION R: "Use of OSI IS-IS for Routing in TCP/IP and Dual environments; rfc1195.txt", NETWORK WORKING GROUP RFC 1717, INTERNET SOCIETY (ISOC) 4, RUE DES FALAISES CH- 1205 GENEVA, SWITZERLAND, CH, discloses Integrated IS-IS provides a single routing protocol.

The document US 2014/ 0043956 A1 discloses at a node device in a network, a unicast message is sent to a plurality of node devices in the network. The node device obtains an identifier associated with each of the node devices in the network. The identifier contains information indicating node connectivity for each of the node devices. A selected node device is then identified. The selected node device is one of the node devices in the network that has a lowest identifier value indicating a lowest number of connected node devices to the selected node device in the network. The selected node device is classified as a root flooding tree node device. A flooding tree is generated by performing a shortest path first operation from the selected node device to the plurality of node devices in the network.

### Summary of the Invention

An ISIS-based flooding method and device according to independent claims are provided. Further improvements and embodiments are provided in the dependent claims.

Also provided is an Intermediate System to Intermediate System ISIS-based flooding method, including: an Intermediate System IS in a network topology taking a pre-appointed IS in the network topology as a tree root, and executing a Shortest Path First SPF algorithm to compute an unpruned distribution tree that reaches all ISs in the network topology; and the IS in the network topology performing flooding on a Link State Protocol Data Unit LSP packet along the distribution tree.

An IS in a network topology taking a pre-appointed IS in the network topology as a tree root includes: the IS in the network topology taking an IS with a largest System ID in the network topology as the tree root.

After the IS in the network topology taking the pre-appointed IS in the network topology as the tree root and executing the SPF algorithm, the method further includes: processing a neighbor metric notified by any non-pseudo node as 1 in a computation process of executing the SPF algorithm; and ignoring an Over Load OL flag bit in the LSP packet.

The IS in the network topology performing flooding on an LSP packet along the distribution tree includes: the IS in the network topology sending out a generated LSP packet from outgoing interfaces on the distribution tree; or the IS in the network topology sending out a received LSP packet generated by another IS from outgoing interfaces except a receiving interface on the distribution tree.

The IS in the network topology performing flooding on an LSP packet along the distribution tree includes: classifying the LSP packet as an important LSP packet or an unimportant LSP packet according to importance; and the IS in the network topology performing flooding on the unimportant LSP packet along the distribution tree.

Classifying the LSP packet as an important LSP packet or an unimportant LSP packet according to importance includes: setting a general flag bit in an ISIS protocol packet; and when the IS in the network topology generates an LSP packet with a non-zero number and not including neighbor TLV, setting the general flag bit to a value which is used for indicating that the LSP packet is an unimportant LSP packet.

Setting a general flag bit in the ISIS protocol packet includes: defining an eighth bit of a fifth byte of a common header in the ISIS protocol packet as the general flag bit.

The value which is used for indicating that the LSP packet is the unimportant LSP packet is 1.

Classifying the LSP packet as an important LSP packet or an unimportant LSP packet according to importance further includes: otherwise, setting the general flag bit to a value which is used for indicating that the LSP is an important LSP.

The value which is used for indicating that the LSP packet is the important LSP packet is 0.

Also provided is an Intermediate System to Intermediate System ISIS-based flooding device is provided, located on an Intermediate System IS in a network topology, including: a computation module arranged to take a pre-appointed IS in the network topology as a tree root, and execute a Shortest Path First SPF algorithm to compute an unpruned distribution tree that reaches all ISs in the network topology; and a flooding module arranged to perform flooding on a Link State Protocol Data Unit LSP packet along the distribution tree.

Through the embodiments of the present invention, by adopting the method that an IS in a network topology takes a pre-appointed IS in the network topology as a tree root, and executes an SPF algorithm to compute an unpruned distribution tree that reaches all ISs in the network topology; and the IS in the network topology performs flooding on an LSP packet along the distribution tree, the problem that excessive resources are occupied by LSPs in the related art is solved, the redundant sending from unnecessary interfaces during synchronization of a great number of LSPs is eliminated, the overall data stream load of a network is reduced, the processing resources occupied by an IS device to send a great number of LSPs from all interfaces are reduced and the overall performance of the IS device is improved.

### Brief Description of Drawings

The drawings described here are used for providing further understanding about the present invention and constitute a part of the present invention. The exemplary embodiments of the present invention and the description thereof are used for explaining the present invention instead of improperly limiting the present invention. In the drawings:
FIG. 1 illustrates a flowchart of an ISIS-based flooding method according to the embodiment of the present invention.
FIG. 2 illustrates a structural diagram of an ISIS-based flooding device according to the embodiment of the present invention.
FIG. 3 illustrates a structural schematic diagram of a common header of an original ISIS protocol packet according to one alternative embodiment of the present invention.
FIG. 4 illustrates a structural schematic diagram of a common header of a modified ISIS protocol packet according to one alternative embodiment of the present invention.
FIG. 5 illustrates a flowchart of setting a G flag bit during generation of an LSP according to one alternative embodiment of the present invention.
FIG. 6 illustrates a schematic diagram of a flooding topology of an ISIS protocol LSP packet according to one alternative embodiment of the present invention.

### Specific Embodiments

The present invention will be described below in detail with reference to the drawings in combination with the embodiments. It needs to be stated that the embodiments in the present application and the features in the embodiments may be mutually combined under the situation of no conflict.

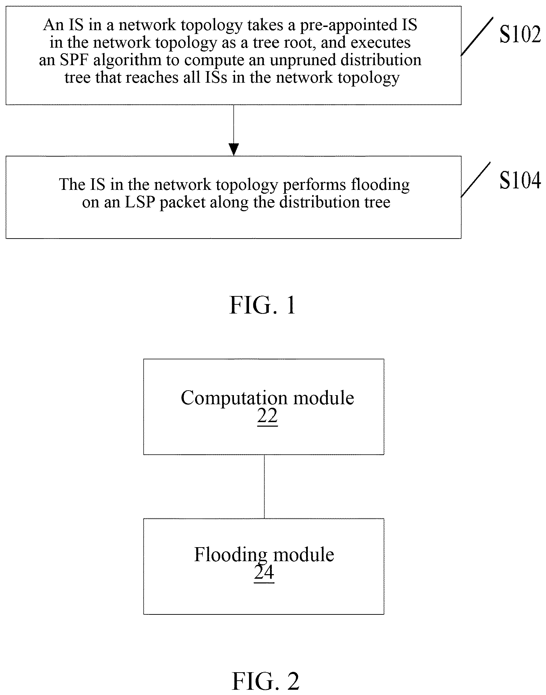

In the present embodiment, an ISIS-based flooding method is provided. FIG. 1 illustrates a flowchart of an ISIS-based flooding method according to the embodiment of the present invention. As illustrated in FIG. 1, the method includes the following steps.

In step S102, an Intermediate System (IS) in a network topology takes a pre-appointed IS in the network topology as a tree root, and executes a Shortest Path First (SPF) algorithm to compute an unpruned distribution tree that reaches all ISs in the network topology.

In step S104, the IS in the network topology performs flooding on a Link State Protocol Data Unit (LSP) packet along the distribution tree.

In the present embodiment, through the above-mentioned steps, the IS in a network topology executes an SPF algorithm according to an appointment to compute a distribution tree and sends an LSP packet along the distribution tree. As compared with the flooding method of sending an LSP packet from each interface including ISIS neighbors in the existing technology, the network load and the possible adverse influence caused by flooding of a great number of LSPs on a network are reduced, the problem that excessive resources are occupied by LSPs in the existing technology is solved, the redundant sending from unnecessary interfaces during synchronization of a great number of LPSs is eliminated, the overall data stream load of the network is reduced, the processing resources occupied by an IS device to send a great number of LSPs from all interfaces are reduced and the overall performance of the IS device is improved.

As an alternative implementation mode, the IS in the network topology may pre-appoint an IS with the largest System ID in the network topology as the tree root.

Alternatively, after the IS in the network topology executes the SPF algorithm, the IS may also process a neighbor metric notified by any non-pseudo node as 1 in a computation process of executing the SPF algorithm; and ignore an Over Load (OL) flag bit in the LSP packet.

Alternatively, t the IS in the network topology performing flooding on the LSP packet along the distribution tree may specifically include: for an IS which generates an LSP packet in the network topology, the IS may send out the generated LSP packet from outgoing interfaces on the distribution tree; or for an IS which does not generate an LSP packet in the network topology, the IS may send out a received LSP packet generated by another IS from outgoing interfaces except a receiving interface on the distribution tree.

As an alternative embodiment, the IS in the network topology may classify the LSP packet as an important LSP packet or an unimportant LSP packet according to importance; and the IS in the network topology may perform flooding on the unimportant LSP packet along the distribution tree. Alternatively, a general flag bits may be set in an ISIS protocol packet; when the IS in the network topology generates an LSP packet with a non-zero number and not including neighbor TLV, the general flag bit is set to a value which is used for indicating that the LSP packet is an unimportant LSP packet; and otherwise, the general flag bit is set to a value which is used for indicating that the LSP is an important LSP packet. Herein, an eighth bit of a fifth byte of a common header in the ISIS protocol packet may be defined as the general flag bit, the value which is used for indicating that the LSP packet is the unimportant LSP packet may be set as 1 and the value which is used for indicating that the LSP packet is the important LSP packet may be set as 0.

Corresponding to the above-mentioned method, in this embodiment, an ISIS-based flooding device is further provided and is located on an Intermediate System (IS) in a network topology. The device is arranged to implement the above-mentioned embodiment and alternative implementation modes, which have already been described and thus are not repetitively described. As used below, the term "module" may be a combination of software and/or hardware which realizes a predetermined function. Although the device described in the embodiment below is more alternatively implemented through software, implementation through hardware or a combination of software and hardware may also be conceived.

FIG. 2 illustrates a structural diagram of an ISIS-based flooding device according to the embodiment of the present invention. As illustrated in FIG. 2, the device includes a computation module 22 and a flooding module 24. All modules will be described below in detail.

The computation module 22 is arranged to take a pre-appointed IS in the network topology as a tree root, and execute a Shortest Path First (SPF) algorithm to compute an unpruned distribution tree that reaches all ISs in the network topology; and the flooding module 24 is connected with the computation module and is arranged to perform flooding on an LSP packet along the distribution tree which is computed by the computation module 22.

Description will be made below in combination with alternative embodiments. The alternative embodiments below combine the above-mentioned embodiment and the alternative implementation modes thereof.

An ISIS protocol LSP flooding method is provided and runs on an ISIS network device, such that the network load of ISIS LSPs can be reduced. For an LSP with a non-zero number and not including neighbor information, all intermediate systems in the network compute a consistent unpruned distribution tree to perform flooding. An eighth bit of a fifth byte of a common header in an ISIS protocol packet is defined as a General (G) flag bit which represents that the LSP is general information, and it is set to 1, when the LSP with the non-zero number or the LSP not including neighbor information is generated. For the LSP packet with the G flag bit which is set to 1, flooding is performed along the distribution tree, and for the LSP with the G flag bit which is set to 0, flooding will be performed according to an original protocol. During computation of the distribution tree, an Intermediate System (IS) with the largest System ID in the network is adopted as the tree root, a Shortest Path First (SPF) algorithm is executed, neighbor metrics of all non-pseudo nodes are considered as 1 during computation and an Over Load (OL) flag bit in the LSP packet is ignored, such that an unpruned distribution tree that reaches all ISs in the network topology can be computed. By adopting this method, the redundant sending from unnecessary interfaces during synchronization of a great number of LSPs is eliminated, the overall data stream load of the network is reduced, the processing resources occupied for an IS device to send a great number of LSPs from all interfaces are reduced; and the overall performance of an IS device is improved. Simultaneously, the solution of the alternative embodiment is also compatible with ISIS base protocol (RFC1142) LSP flooding and synchronization methods. This solution is applicable to various devices supporting ISIS, including routers, switches, etc.

Specifically, in the alternative embodiment, an ISIS protocol LSP flooding method is provided. Firstly, the base protocol of ISIS is modified to support the LSP flooding method provided by the alternative embodiment, i.e., an eighth bit of a fifth byte of a common header in an ISIS protocol packet is defined as a General (G) flag bit.

When an IS generates an LSP packet with a non-zero number and including no neighbor TLV, the G flag bit in a common header filed is set to 1; and otherwise, the G flag bit in the common header field is set to 0.

A computation method for the above-mentioned distribution tree is as follow: in a network topology, any IS takes an IS with the largest System ID in the network topology as a tree root and executes an SPF algorithm to compute an unpruned distribution tree, and a neighbor metric notified by any non-pseudo node is processed as 1 in a computation process. In addition, an Over Load (OL) flag bit in the LSP is ignored to guarantee that the distribution tree can reach any ISs in the network topology.

A specific method for performing flooding to the LSP packet with the G flag bit in the common header of the LSP which is set to 1 along the computed distribution tree may be as follow:
(1) For an LSP with a zero number and including neighbor information, which is generated by any IS itself in a network topology, a G flag bit in a common header of the LSP packet will be set to 0, and thus the LSP packet will be sent out from all interfaces including ISIS neighbors; and for an LSP with a zero number and including neighbor information, which is received from an interface and is generated by another IS, i.e., an LSP packet with a G flag bit which is set to 0 in a common header of the LSP packet, the LSP packet will be sent out from all other interfaces including ISIS neighbors except from the receiving interface. Regardless of the existence of the distribution tree, such operation is always performed on that type of LSP packets with the G flag bit which is set to 0 in the common header.
(2) For an LSP with a non-zero number and not including neighbor information, which is generated by any IS itself in a network topology after a distribution tree is computed, i.e., an LSP, which is generated by the IS itself, with a G flag bit which is set to 1, the LSP will be sent out from outgoing interfaces on the distribution tree; and for an LSP with a non-zero number and not including neighbor information, which is received from an interface and is generated by another IS, i.e., an LSP with a G flag bit which is set to 1, the LSP will be sent out from outbound interfaces except the interface for receiving the LSP on the distribution tree.
(3) When the distribution tree is invalid or cannot provide LSP sending, an LSP which is generated by any IS itself in a network topology will be sent out from all interfaces including ISIS neighbors; and an LSP which is received from an interface and is generated by another IS will be sent out from all other interfaces including ISIS neighbors except the interface for receiving the LSP.

By adopting the ISIS protocol LSP flooding method, the network load and the possible adverse influence caused by flooding of a great number of LSPs on a network can be reduced.

Implementation modes of the ISIS protocol LSP flooding method provided by the alternative embodiment will be described below in detail.

### I. Link State Protocol Data Unit (LSP) packet protocol modification

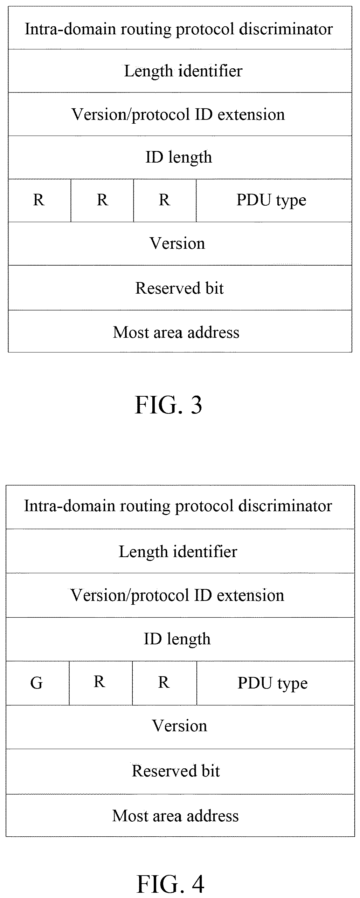

FIG. 3 illustrates a structural schematic diagram of a common header of an original ISIS protocol packet according to the alternative embodiment of the present invention. As illustrated in FIG. 3, in the original ISIS protocol packet, there is a common header with a length of 8 bytes, herein all bytes are respectively as follows: a first byte represents intra-domain routing protocol discriminator; a second byte represents length identifier; a third byte represents version/protocol ID extension; a fourth byte represents ID length; a fifth byte represents reserved bits of eighth to sixth bits and PDU type of fifth to first bits; a sixth byte represents version; a seventh byte represents reserved bit; and an eighth byte represents most area address.

FIG. 4 illustrates a structural schematic diagram of a common header of a modified ISIS protocol packet according to one alternative embodiment of the present invention. As illustrated in FIG. 4, in the alternative embodiment, a reserved and unused bit, i.e., an eighth bit in the fifth byte thereof is defined as a general flag bit, i.e., a G flag bit. When the G flag bit is set to 1, it represents that the packet is a general packet; and when the G flag bit is set to 0, it represents that the packet is an important packet. In the alternative embodiment, when an LSP packet is an important LSP packet, it represents that the LSP packet influences a topological structure, and the LSP packet is specifically reflected as an LSP packet with a zero number and including neighbor TLV; and when an LSP packet is a general LSP packet, it represents this LSP packet is an LSP packet with a non-zero number and including no neighbor TLV.

When an IS generates an LSP packet with a non-zero number and including no neighbor TLV, the general flag bit in the common header of the LSP packet needs to be set to 1; and otherwise, the general flag bit is set to 0.

### II. Distribution tree computation method

Any IS in a network topology takes an IS with the largest System ID in the network topology as a tree root and executes an SPF algorithm to compute an unpruned distribution tree, and a neighbor metric notified by any non-pseudo node is processed as 1 in a computation process. In addition, an Over Load (OL) flag bit in an LSP is ignored to guarantee that the distribution tree can reach any ISs in the network topology.

### III. Flooding method

When an IS performs flooding on an LSP packet on a network, flooding will be performed along a computed distribution tree. A specific method is as follow:
(1) For an LSP with a zero number and including neighbor information, which is generated by any IS itself in a network topology, a G flag bit in a common header of this LSP packet will be set to 0, and thus the LSP packet will be sent out from all interfaces including ISIS neighbors; and for an LSP having a zero number and including neighbor information, which is received from an interface and is generated by another IS, i.e., an LSP packet with a G flag bit which is set to 0 in a common header of the LSP packet, the LSP packet will be sent out from all other interfaces including ISIS neighbors except from the interface for receiving the LSP. Regardless of the existence of the distribution tree, such operation is always performed on that type of LSP packets with the G flag bit which is set to 0 in the common header.
(2) For an LSP with a non-zero number and including no neighbor information, which is generated by any IS itself in a network topology after a distribution tree is computed, i.e., an LSP, which is generated by the IS itself, with a G flag bit which is set to 1, the LSP will be sent out from outgoing interfaces on the distribution tree; and for an LSP with a non-zero number and including no neighbor information, which is received from an interface and is generated by another IS, i.e., an LSP with a G flag bit which is set to 1, the LSP will be sent out from outgoing interfaces except the interface for receiving the LSP on the distribution tree.
(3) When the distribution tree is invalid or cannot provide LSP sending, an LSP which is generated by any IS itself in a network topology will be sent out from all interfaces including ISIS neighbors; and an LSP which is received from an interface and is generated by another IS will be sent out from all other interfaces including ISIS neighbors except the interface for receiving the LSP.

In addition, the solution provided by the alternative embodiment is fully compatible with ISIS base protocol (RFC1142) LSP flooding and synchronization methods. For ISs which do not support the flooding method in the alternative embodiment, the G flag bit may be ignored.

The ISIS protocol LSP flooding method has the following advantages:
(1) The overall traffic load of the network topology is reduced: sending of LSPs with non-zero numbers and including no neighbor information does not need to be performed from some interfaces and the overall network traffic load is reduced.
(2) The flooding efficiency is improved: under many circumstances, it is possibly unnecessary for an IS to send an LSP from all interfaces which are owed by the IS for reasons as follows: on one hand, an opposite IS has already received the LSP packet from another interface connected with the IS; and on the other hand, the LSP packet possibly has already been received from another IS on the network. Thereby, this flooding method eliminates the redundant sending of the LSP from some interfaces and simultaneously can guarantee that all ISs on the network receive the LSP packet, such that the LSP sending becomes more efficient.
(3) The sending performance is improved: as compared with the traditional method of sending from all interfaces, since the IS performs sending from some interfaces, the IS processing performance is improved, and the risks that the CPU is caused to be highly occupied, the CPU resource cannot be released and the links between these interfaces and the neighbors are disconnected since many LSP packets need to be sent from many interfaces are not caused.

The ISIS protocol LSP packet flooding solution in the alternative embodiment will be described below in detail with reference to the drawings. Herein, a process of setting a G flag bit during generation of an LSP and an LSP flooding process will be mainly described here.

### I. Process of setting G flag bit during generation of LSP

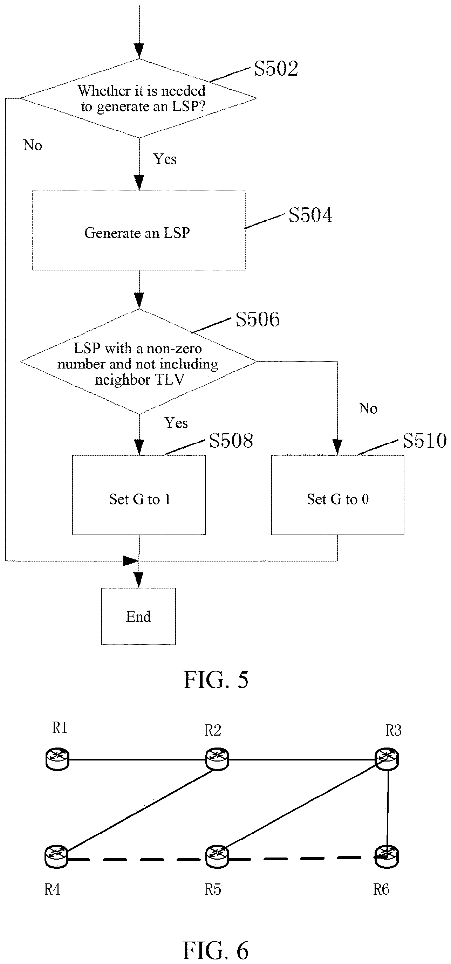

FIG. 5 illustrates a flowchart of setting a G flag bit during generation of an LSP according to one alternative embodiment of the present invention. As illustrated in FIG. 5, the process includes the following steps.

In step S502, an Intermediate System (IS) judges whether it is needed to generate an LSP packet; if yes, step S504 is executed; and otherwise, the process is ended.

In step S504, the IS generates an LSP packet.

In step S506, after the IS generates the LSP packet of the IS, the IS judges whether the LSP is an LSP with a non-zero number and including no neighbor TLV (Type, Length, Value); if yes, step S508 is executed; and otherwise, step S510 is executed.

In step S508, if the LSP is the LSP with the non-zero number and including no neighbor TLV, a G flag bit in a common header of the LSP is set to 1 and then the process is ended.

In step S510, otherwise, the G flag bit is set to 0 and then the process is ended.

### II. LSP flooding process

FIG. 6 illustrates a schematic diagram of a flooding topology of an ISIS protocol LSP packet according to one alternative embodiment of the present invention. As illustrated in FIG. 6, in a network consisting of R2, R3, R4, R5 and R6, all connecting lines represent links between network devices of the network, full lines represent links which are on a distribution network and dashed lines represent links which are not on the distribution tree. It is supposed that R1 is added into the network topology after the network becomes stable.

After the intermediate system R1 is added into the network topology, a neighbor relationship of a Local Area Network (LAN) broadcast network is established with R2, the intermediate system R1 at this moment does not compute a distribution tree, and thus all LSPs generated by R1 are sent from an interface which is connected with R2. After R2 receives an LSP of R1, for an LSP with a zero number and including neighbor information of R1, i.e., an LSP with a G flag bit which is set to 0, the LSP is sent out from all other interfaces except a receiving interface and is sent to R3 and R4. After R3 receives the LSP generated by R1, the LSP with the zero number and including neighbor information, i.e., the LSP with the G flag bit which is set to 0 will also be sent out from all other interfaces except a receiving interface and is sent to R5 and R6. After R4 receives the LSP generated by R1, the LSP with the zero number and including neighbor information, i.e., the LSP with the G flag bit which is set to 0 will also be sent out from all other interfaces except a receiving interface and is sent to R5, R5 finds that the LSP has already been had and sending is ended. Simultaneously, a Designated Intermediate System (DIS) will be selected between R1 and R2, a Complete Sequence Number Protocol Data Unit (CSNP) is periodically sent after R2 which is selected as the DIS is added, the CSNP contains abstract information of all LSPs saved by R2, R1 finds that R1 does not have LSP packets of R2, R3, R4, R5 and R6 after the CSNP is received, R1 will send a Partial Sequent Number Protocol Data Unit (PSNP) packet to R2 to request for these LSPs, and at this moment R2 will send LSPs of R2, R3, R4, R5 and R6 to R1. At this moment, the LSP packet database information in the entire network is consistent.

After LSP synchronization, R1, R2, R4, R4, R5 and R6 finally use uniform LSP database information, and select R2 (with the largest System ID) as a tree root to execute an SPF algorithm to compute a distribution tree shown by black full lines in the drawing.

Assuming that R1 generates an LSP with a zero number again, a G flag bit will be set to 0, and the LSP packet will be sent from interfaces of all neighbors of R1 and is sent to R2. After R2 receives the LSP of R1, for an LSP with a zero number and including neighbor information of R1, i.e., an LSP with a G flag bit which is set to 0, the LSP is still sent out from all other interfaces except a receiving interface and is sent to R3 and R4; and thereby R3, R4, R5 and R6 send out the LSP with the zero number and including neighbor information, i.e., the LSP with the G flag bit which is set to 0, from all other interfaces except a receiving interface until all intermediate systems receive the LSP packet.

Assuming that R1 generates an LSP with a non-zero number and including no neighbor information in content, a G flag bit will be set to 1, at this moment R1 finds that R1 has already computed the distribution tree, the LSP will be sent along the distribution tree shown by full lines and is sent to R3 and R4; after R3 receives the LSP, the LSP is still sent along the distribution tree shown by full lines and is sent to R5 and R6; and after receiving the LSP, R3 finds that there are no other interfaces on the distribution tree except an interface which receives the LSP, forwarding is ended and the LSP will not be forwarded from interfaces connected with R5. Thereby, finally all intermediate systems in FIG. 6 receive the LSP with the non-zero number generated by R1, and a synchronous state is achieved.

In another embodiment, software is further provided. The software is used for executing the technical solutions described in the above-mentioned embodiments and alternative embodiments.

In another embodiment, a storage medium is further provided. The storage medium stores the above software and includes but not limited to a compact disk, a soft disk, a hard disk, an erasable memory, etc.

Obviously, one skilled in the art should understand that all modules and all steps of the present invention may be implemented by using general-purpose computing devices, they may be integrated in a single computing device or distributed on a network consisting of a plurality of computing devices, optionally they may be implemented by using program codes executable for computing devices, thus they may be stored in memory devices and executed by computing devices, and under certain circumstances, the illustrated or described steps may be executed according to a sequence difference from the sequence described here, or they may be respectively manufactured into integrated circuit modules or a plurality of modules or steps thereof may be manufactured into a single integrated circuit module to implement. Therefore, the present invention is not limited to any specific combination of hardware and software.

The embodiments described above are just alternative embodiments of the present invention and are not used for limiting the present invention. For one skilled in the art, the present invention may have various modifications and variations.

### Industrial Applicability

As described above, the ISIS-based flooding method and device provided by the embodiments of the present invention have the following beneficial effects: the problem that excessive resources are occupied by LSPs in the existing technology is solved, the redundant sending from unnecessary interfaces during synchronization of a great number of LPSs is eliminated, the overall data stream load of the network is reduced, the processing resources occupied by an IS device to send a great number of LSPs from all interfaces are reduced and the overall performance of the IS device is improved.

## Claims

1. An Intermediate System to Intermediate System ISIS-based flooding method, comprising:
an Intermediate System IS in a network topology taking (S102) a pre-appointed IS in the network topology as a tree root, and executing (S102) a Shortest Path First SPF algorithm to compute a distribution tree that reaches all ISs in the network topology;
the IS in the network topology performing flooding on a Link State Protocol Data Unit LSP packet with a zero number and comprising neighbor information; and
the IS in the network topology performing flooding on a LSP packet with a non-zero number and comprising no neighbor information along the distribution tree.

2. The method according to claim 1, wherein an IS in a network topology taking a pre-appointed IS in the network topology as a tree root comprises:
the IS in the network topology taking an IS with a largest System ID in the network topology as the tree root.

3. The method according to claim 1, wherein, after the IS in the network topology taking the pre-appointed IS in the network topology as the tree root and executing the SPF algorithm, further comprises:
processing a neighbor metric notified by any non-pseudo node as 1 in a computation process of executing the SPF algorithm; and
ignoring an Over Load OL flag bit in the LSP packet.

4. The method according to claim 1, wherein the IS in the network topology performing flooding on the LSP packet with a non-zero number and comprising no neighbor information along the distribution tree comprises:
the IS in the network topology sending out a generated LSP packet with a non-zero number and comprising no neighbor information from outgoing interfaces on the distribution tree; or
the IS in the network topology sending out a received LSP packet with a non-zero number and comprising no neighbor information generated by another IS from outgoing interfaces except a receiving interface on the distribution tree.

5. The method according to claim 1, further comprising:
setting a general flag bit in an ISIS protocol packet; and
when the IS in the network topology generates an LSP packet with a non-zero number and comprising no neighbor information, setting (S508) the general flag bit to 1.

6. The method according to claim 5, wherein setting a general flag bit in an ISIS protocol packet comprises:
defining an eighth bit of a fifth byte of a common header in the ISIS protocol packet as the general flag bit.

7. The method according to claim 5, further comprising:
when the IS in the network topology generates an LSP packet with a zero number and comprising neighbor information, setting (S510) the general flag bit to 0.

8. An Intermediate System to Intermediate System ISIS-based flooding device, located on an Intermediate System IS in a network topology, comprising:
a computation module (22) arranged to take a pre-appointed IS in the network topology as a tree root, and execute a Shortest Path First SPF algorithm to compute a distribution tree that reaches all ISs in the network topology; and
a flooding module (24) arranged to perform flooding on a Link State Protocol Data Unit LSP packet with a zero number and comprising neighbor information, and perform flooding on a LSP packet with a non-zero number and comprising no neighbor information along the distribution tree.

## Patentansprüche

1. Auf dem Intermediate-System-to-Intermediate-System (ISIS) basierendes Flooding-Verfahren, umfassend:
ein Intermediate System (IS) in einer Netzwerktopologie, das ein vorbestimmtes IS in der Netzwerktopologie als Baumwurzel verwendet (S102) und einen Shortest Path First (SPF)-Algorithmus ausführt (S102), um einen Verteilungsbaum zu berechnen, der alle IS in der Netzwerktopologie erreicht;
das IS in der Netzwerktopologie, das ein Flooding an einem Link State Protocol Data Unit (LSP)-Paket mit einer Nummer gleich Null, das Nachbarinformationen enthält, durchführt; und
das IS in der Netzwerktopologie, das ein Flooding an einem LSP-Paket mit einer Nummer ungleich Null durchführt und keine Nachbarinformationen entlang des Verteilungsbaums enthält.

2. Verfahren nach Anspruch 1, wobei ein IS in einer Netzwerktopologie, das ein vorbestimmtes IS in der Netzwerktopologie als Baumwurzel verwendet, Folgendes umfasst:
das IS in der Netzwerktopologie, das ein IS mit der größten System-ID in der Netzwerktopologie als Baumwurzel verwendet.

3. Verfahren nach Anspruch 1, wobei, nachdem das IS in der Netzwerktopologie das vorbestimmte IS in der Netzwerktopologie als Baumwurzel verwendet und den SPF-Algorithmus ausgeführt hat, dieses ferner umfasst:
Verarbeiten einer Nachbarmetrik, die von einem beliebigen Nicht-Pseudoknoten als 1 in einem Berechnungsprozess zur Ausführung des SPF-Algorithmus gemeldet wird; und
Ignorieren eines Over Load (OL)-Flag-Bits in dem LSP-Paket.

4. Verfahren nach Anspruch 1, wobei das IS in der Netzwerktopologie, das ein Flooding an einem LSP-Paket mit einer Nummer ungleich Null durchführt und keine Nachbarinformationen entlang des Verteilungsbaums enthält, Folgendes umfasst:
das IS in der Netzwerktopologie, das ein erzeugtes LSP-Paket mit einer Nummer ungleich Null aussendet und keine Nachbarinformationen von ausgehenden Schnittstellen auf dem Verteilungsbaum enthält; oder
das IS in der Netzwerktopologie, das ein empfangenes LSP-Paket mit einer Nummer ungleich Null aussendet und keine Nachbarinformationen enthält, die von einem anderen IS aus ausgehenden Schnittstellen erzeugt werden, außer einer Empfangsschnittstelle auf dem Verteilungsbaum.

5. Verfahren nach Anspruch 1, ferner umfassend:
Setzen eines allgemeinen Flag-Bits in einem ISIS-Protokollpaket; und
wenn das IS in der Netzwerktopologie ein LSP-Paket mit einer Nummer ungleich Null erzeugt und keine Nachbarinformationen enthält, Setzen (S508) des allgemeinen Flag-Bits auf 1.

6. Verfahren nach Anspruch 5, wobei das Setzen eines allgemeinen Flag-Bits in einem ISIS-Protokollpaket umfasst:
Definieren eines achten Bits eines fünften Bytes eines gemeinsamen Headers im ISIS-Protokollpaket als allgemeines Flag-Bit.

7. Verfahren nach Anspruch 5, ferner umfassend:
wenn das IS in der Netzwerktopologie ein LSP-Paket mit einer Nummer gleich Null erzeugt und Nachbarinformationen enthält, Setzen (S510) des allgemeinen Flag-Bits auf 0.

8. Auf dem Intermediate-System-to-Intermediate-System (ISIS) basierende Flooding-Vorrichtung, die in einem Intermediate System (IS) in einer Netzwerktopologie enthalten ist, umfassend:
ein Berechnungsmodul (22), das angeordnet ist, um ein vorbestimmtes IS in der Netzwerktopologie als Baumwurzel zu verwenden und einen Shortest Path First (SPF)-Algorithmus auszuführen, um einen Verteilungsbaum zu berechnen, der alle IS in der Netzwerktopologie erreicht; und
ein Flooding-Modul (24), das angeordnet ist, um ein Flooding an einem Link State Protocol Data Unit (LSP)-Paket mit einer Nummer gleich Null, das Nachbarinformationen enthält, durchzuführen, und ein Flooding an einem LSP-Paket mit einer Nummer ungleich Null, das keine Nachbarinformationen entlang des Verteilungsbaums enthält, durchzuführen.

## Revendications

1. Procédé d'inondation basé sur le protocole IS-IS - système intermédiaire à système intermédiaire - comprenant :
un système intermédiaire IS dans une topologie réseau prenant (S102) un IS prénommé dans la topologie réseau comme une racine d'arbre, et exécutant (S102) un algorithme SPF - le plus court chemin d'abord - pour calculer un arbre de distribution qui atteint tous les IS dans la topologie réseau ;
l'IS dans la topologie réseau exécutant l'inondation sur un paquet d'unité LSP - protocole d'état de lien - avec un nombre zéro et comprenant une information de voisinage ; et
l'IS dans la topologie réseau exécutant une inondation sur un paquet LSP avec un nombre autre que zéro et ne comprenant aucune information de voisinage le long de l'arbre de distribution.

2. Procédé selon la revendication 1, dans lequel un IS dans une topologie réseau prenant un IS prénommé dans la topologie de réseau comme une racine d'arbre comprend :
l'IS dans la topologie de réseau prenant un IS avec le plus grand ID système dans la topologie de réseau comme la racine d'arbre.

3. Procédé selon la revendication 1, dans lequel, après l'IS dans la topologie de réseau prenant l'IS prénommé dans la topologie de réseau comme la racine d'arbre et exécutant l'algorithme SPF, comprend en outre :
le traitement d'une mesure de voisin notifié par un non-pseudo noeud comme 1 dans un processus de calcul d'exécution de l'algorithme SPF ; et
l'ignorance d'un bit indicateur de surcharge OL dans le paquet LSP.

4. Procédé selon la revendication 1, dans lequel l'IS dans la topologie de réseau exécutant une inondation sur le paquet LSP avec un nombre autre que zéro et ne comprenant aucune information de voisinage le long de l'arbre de distribution comprend :
l'IS dans la topologie de réseau envoyant un paquet LSP généré avec un nombre autre que zéro et ne comprenant aucune information de voisinage en provenance d'interfaces de sortie sur l'arbre de distribution ; ou
l'IS dans la topologie de réseau envoyant un paquet LSP reçu avec un nombre autre que zéro et ne comprenant aucune information de voisinage générée par un autre IS en provenance d'interfaces de sortie à l'exception d'une interface de réception sur l'arbre de distribution.

5. Procédé selon la revendication 1, comprenant en outre :
la définition d'un bit indicateur général sur un paquet de protocole IS-IS ; et
quand l'IS dans la topologie de réseau génère un paquet LSP avec un nombre autre que zéro et ne comprenant aucune information de voisinage, la définition (S508) du bit indicateur général sur 1.

6. Procédé selon la revendication 5, dans lequel la définition d'un bit indicateur général dans un paquet de protocole IS-IS comprend :
la définition d'un huitième bit d'un cinquième octet d'un en-tête commun dans le paquet de protocole IS-IS comme le bit indicateur général.

7. Procédé selon la revendication 5, comprenant en outre :
quand l'IS dans la topologie de réseau génère un paquet LSP avec un nombre zéro et comprenant une information de voisinage, la définition (S510) du bit indicateur général sur 0.

8. Dispositif d'inondation basé sur le protocole IS-IS - système intermédiaire à système intermédiaire - situé sur un système intermédiaire IS dans une topologie de réseau, comprenant :
un module de calcul (22) agencé pour prendre un IS prénommé dans la topologie réseau comme une racine d'arbre, et exécuter un algorithme SPF - le plus court chemin d'abord - pour calculer un arbre de distribution qui atteint tous les IS dans la topologie de réseau ; et
un module d'inondation (24) agencé pour exécuter une inondation sur un paquet d'unité LSP - protocole d'état de lien - avec un nombre zéro et comprenant une information de voisinage ; et exécuter une inondation sur un paquet LSP avec un nombre autre que zéro et ne comprenant aucune information de voisinage le long de l'arbre de distribution.
